# EUROPÄISCHE PATENTSCHRIFT

(11) **EP 4 569 259 B1**
(45) Veröffentlichungstag und Bekanntmachung des Hinweises auf die Patenterteilung: **03.06.2026**
(21) Anmeldenummer: 23740964.4
(22) Anmeldetag: 04.07.2023
(51) Int. Cl.: F17C 13/02

(54) **VERFAHREN ZUM BEFÜLLEN EINES BRENNGASTANKS MIT BRENNGAS, BRENNGASTANK SOWIE BRENNGASTANKSYSTEM**
METHOD FOR FILLING A FUEL-GAS TANK WITH FUEL GAS, FUEL-GAS TANK AND FUEL-TANK SYSTEM
PROCÉDÉ DE REMPLISSAGE D'UN RÉSERVOIR DE GAZ COMBUSTIBLE AVEC UN GAZ COMBUSTIBLE, RÉSERVOIR DE GAZ COMBUSTIBLE ET SYSTÈME DE RÉSERVOIR DE COMBUSTIBLE

(30) Priorität: 08.08.2022 DE 102022208214
(43) Veröffentlichungstag der Anmeldung: 18.06.2025
(73) Patentinhaber: Robert Bosch GmbH, 70442 Stuttgart (DE)
(72) Erfinder: KATZ, Martin, 70469 Stuttgart (DE); WESSNER, Jochen, 73728 Esslingen (DE)
(86) Internationale Anmeldenummer: PCT/EP2023/068391
(87) Internationale Veröffentlichungsnummer: WO 2024/032980

(56) Entgegenhaltungen:
- EP-A1- 2 757 305
- EP-A1- 3 021 031
- WO-A1-2021/214701
- DE-A1- 102015 212 979
- DE-A1- 102018 121 267
- US-A1- 2010 032 934
- US-A1- 2010 206 887
- US-B2- 10 948 087

## Beschreibung

Die Erfindung betrifft ein Verfahren zum Befüllen eines Brenngastanks mit Brenngas. Bei dem Brenngas kann es sich beispielsweise um Wasserstoff oder Erdgas handeln. Derartige Brenngase werden beispielsweise von Brennstoffzellenfahrzeugen oder Fahrzeugen mit Gasmotor benötigt.

Darüber hinaus betrifft die Erfindung einen Brenngastank für ein Brenngastanksystem sowie ein Brenngastanksystem mit mindestens einem erfindungsgemäßen Brenngastank.

### Stand der Technik

In Fahrzeugen, die mit einem Brenngas, wie beispielsweise Wasserstoff, betrieben werden, wird das Brenngas üblicherweise unter Druck in einem Brenngastank bevorratet. Bei Wasserstoff kann der Druck bis zu 70 MPa betragen. Die Temperatur im Brenngastank kann dabei bis auf 85°C ansteigen. Die Temperaturgrenze wird dabei in der Regel durch das Material des Brenngastanks vorgegebenen, wobei als Material häufig kohlenstofffaserverstärkter Kunststoff ("CFK") verwendet wird. Bei Verwendung eines CFK-Materials werden oberhalb von 85°C die zur Fixierung der Kohlenstofffasern notwendigen Kunststoffe, insbesondere Kunstharze, zu weich, so dass die erforderliche Festigkeit des Brenngastanks nicht mehr gewährleistet ist.

Da beispielsweise Wasserstoff im relevanten Temperaturbereich einen negativen Joule-Thomson Effekt aufweist, erwärmt er sich beim Betanken eines Brenngas- bzw. Wasserstofftanks. Um Schäden am Brenngastank zu vermeiden, wird daher Wasserstoff vor dem Tankvorgang auf etwa - 40°C abgekühlt. Ferner kann eine nach oben abgeknickte Tanklanze zum Befüllen des Brenngastanks verwendet werden, welche die Vermischung von frischem Wasserstoff mit dem Tankinhalt fördert und dadurch die Aufheizung verringert. Als weitere Maßnahme kann die Tanktemperatur gemessen bzw. überwacht werden, so dass bei Überschreiten der Temperaturgrenze der Tankvorgang abgebrochen werden kann. Damit die Temperaturgrenze sicher eingehalten wird, muss der Abbruch frühzeitig erfolgen. Hohe Messtoleranzen wirken sich daher negativ aus. Da üblicherweise die Ermittlung der im Brenngastank gespeicherten Masse ebenfalls basierend auf der Tanktemperatur durchgeführt wird, können hohe Messtoleranzen ferner zu einem fehlerhaft berechneten Tankstand bzw. einer fehlerhaft berechneten Restreichweite führen.

Für beide Zwecke ist es daher wünschenswert, eine möglichst genaue Information über die Temperatur in einem Brenngastank zu erhalten. Allerdings ist für die Einhaltung der Temperaturgrenze die lokal auftretende maximale Temperatur entscheidend, während für die Berechnung der gespeicherten Masse die mittlere Temperatur besser geeignet ist. Diese beiden Wünsche zu vereinbaren, gestaltet sich schwierig. Dies gilt im Besonderen, da üblicherweise Thermoelemente, Thermistoren oder Temperaturwiderstände zur Temperaturmessung eingesetzt werden, welche die Temperatur lediglich in ihrer unmittelbaren Umgebung erfassen können. Aufgrund der begrenzten Zugänglichkeit des Tankinnenraums ist zudem die Auswahl der Sensorposition stark eingeschränkt.

Aus der US 2010/ 0032934 A1 geht beispielhaft ein Brenngastank mit einer Tankleitung und einem Tankventil zum Befüllen des Brenngastanks mit Brenngas sowie einem an der Tankleitung angeordneten Sensor zum Erfassen einer Zustandsgröße des Brenngases hervor. Der Sensor ist in der Weise positioniert, dass er beim Befüllen des Brenngastanks mit Brenngas außerhalb des sich bildenden Druckstrahls liegt. Auf diese Weise soll die Messgenauigkeit des Sensors erhöht werden.

Die DE 10 2015 212979 A1 zeigt ein Verfahren zum Befüllen eines Speichervolumens eines Brenngastanks mit Brenngas, bei dem das Brenngas über einen Betankungspfad mit integriertem Tankventil in das Speichervolumen eingeleitet wird und mit Hilfe eines Sensors die Temperatur des Brenngases im Bereich eines Staupunkts erfasst wird.

Aus der US 10 948 087 B2 ist ein Tankventil eines Druckgasbehälters bekannt, umfassend: einen Grundkörper, wobei der Grundkörper einen ersten Grundkörperabschnitt umfasst, der im eingebauten Zustand in den Druckgasbehälter hineinragt und dicht mit dem Druckgasbehälter verbunden ist.

Die EP 2 757 305 A1 offenbart Kraftstofftankventil, umfassend:
einen Ventilhauptkörper mit einer Einfüllöffnung, durch die ein Brenngas in einen Tank gefüllt wird, und einer Ausgangsöffnung, durch die das Brenngas in dem Tank ausgestoßen wird

In der DE 10 2018 121267 A1 ist ein Verfahren zum Betrieb eines Kraftfahrzeugs mit einem Druckbehältersystem offenbart.

Die US 2010/206887 A1 offenbart ein Kraftstoffspeichersystem, wobei das Kraftstoffspeichersystem ein Vorratsgefäß umfasst, mit einer dielektrischen Auskleidung, einen Spannungssensor, der aus einem Paar Platten besteht, die auf gegenüberliegenden Oberflächen der Auskleidung angeordnet sind.

In der WO 2021/214701 A1 ist ein Multifunktionsventil für einen Flansch für ein Brennstoffzellen-Automobilsystem gezeigt, umfassend: einen Ventilkörper, der einen Hauptabschnitt und einen Befestigungsabschnitt umfasst, der sich von dem Hauptabschnitt entlang einer Befestigungsachse erstreckt und mit einer Kopffläche endet

Aus der EP 3 021 031 A1 ist ein Hochdruckbehälter bekannt mit hoher Spannweite der Klasse, der einen Tankhauptkörper einschließlich eines Mundstücks, ein am Mundstück angebrachtes Ventil und ein Rohr umfasst.

Die vorliegende Erfindung ist mit der Aufgabe befasst, beim Befüllen eines Speichervolumens eines Brenngastanks mit Brenngas die Einhaltung einer vorgegebenen Temperaturgrenze sicherzustellen, um eine Überbelastung des Brenngastanks zu vermeiden.

Zur Lösung der Aufgabe werden das Verfahren mit den Merkmalen des Anspruchs 1 sowie der Brenngastank mit den Merkmalen des Anspruchs 5 vorgeschlagen. Vorteilhafte Weiterbildungen der Erfindung sind den jeweiligen Unteransprüchen zu entnehmen. Des Weiteren wird ein Brenngastanksystem mit mindestens einem erfindungsgemäßen Brenngastank angegeben.

### Offenbarung der Erfindung

Bei dem vorgeschlagenen Verfahren zum Befüllen eines Speichervolumens eines Brenngastanks mit Brenngas wird das Brenngas über einen Betankungspfad mit integriertem Tankventil in das Speichervolumen eingeleitet. Dabei wird mit Hilfe eines in den Betankungspfad integrierten Sensors die Temperatur des Brenngases im Bereich eines Staupunkts erfasst, der durch den Sensor und/oder einen den Sensor aufnehmenden Haltekörper ausgebildet wird.

Üblicherweise wird die Strömung des in das Speichervolumen eingeleiteten Brenngases erst durch eine das Speichervolumen umschließende Wandung abgebremst bzw. gestaut, was zur Folge hat, dass sich das Brenngas im Bereich der Wandung lokal stark erwärmt. Hierbei können lokale Temperaturmaxima auftreten, die einen zulässigen Grenzwert überschreiten, so dass die Gefahr einer Überbelastung des Brenngastanks besteht. Mit Hilfe des vorgeschlagenen Verfahrens und des innerhalb des Betankungspfads ausgebildeten künstlichen Staupunkts wird die Entstehung eines lokalen Temperaturmaximums - fernab der Wandung - in den Betankungspfad verlegt und mit Hilfe des dort angeordneten Sensors erfasst. Auf diese Weise kann die Einhaltung einer vorgegebenen Temperaturgrenze zur Vermeidung einer Überbelastung des Brenngastanks einfacher und zuverlässiger überwacht werden.

In Weiterbildung der Erfindung wird vorgeschlagen, dass die Messwerte des Sensors mit einem vorab festgelegten Temperatur-Grenzwert verglichen werden und bei Überschreiten des Temperatur-Grenzwerts der Betankungsvorgang abgebrochen oder unterbrochen wird. Diese weiteren Schritte dienen dazu, eine Überbelastung des Brenngastanks sicher zu verhindern. Der vorab festgelegte Temperatur-Grenzwert liegt vorzugsweise noch unter dem Grenzwert, der durch das Material des Brenngastanks vorgegeben ist.

Bevorzugt wird mit Hilfe eines weiteren Sensors die Temperatur des Brenngases außerhalb des Bereichs des Staupunkts, beispielsweise im Speichervolumen, erfasst und aus den Messwerten beider Sensoren wird bzw. werden der Mittel- und/oder Differenzwert ermittelt. Während der im Bereich des Staupunkts angeordnete Sensor ein lokales Temperaturmaximum bzw. die "Totaltemperatur" erfasst, kann mit Hilfe des weiteren Sensors die "statische Temperatur" erfasst werden. Der weitere Sensor ist hierzu außerhalb des Bereichs des Staupunkts angeordnet. Durch Mittelwertbildung kann dann von den Messwerten beider Sensoren auf die mittlere Temperatur im Brenngastank geschlossen werden, die für die Berechnung der gespeicherten Masse benötigt wird. Durch Differenzwertbildung kann zudem die Strömungsgeschwindigkeit des Brenngases beim Befüllen des Speichervolumens mit Brenngas ermittelt werden. Aus der Strömungsgeschwindigkeit des Brenngases kann dann der Massenstrom bzw. die in das Speichervolumen eingeleitete Masse des Brenngases berechnet werden.

Als weiterbildende Maßnahme wird daher vorgeschlagen, dass aus dem Differenzwert die Strömungsgeschwindigkeit des Brenngases während eines Betankungsvorgangs abgeleitet wird.

Während eines Betankungsvorgangs liegen die Totaltemperatur und die statische Temperatur weit auseinander. Das heißt, dass die Differenz der Messwerte der beiden Sensoren groß ist. Während eines Entleerungsvorgangs verhält es sich umgekehrt, vorausgesetzt, dass der Betankungspfad nicht auch zum Entleeren genutzt wird. Ist die Differenz klein bzw. liegen die Messwerte beider Sensoren dicht beieinander, kann diese Information zur Plausibilisierung eines Entleerungsvorgang genutzt werden.

Tritt nach einem Betankungsvorgang eine deutlich überhöhte Temperatur am ersten Sensor auf, kann von einem unkontrollierten "Umtankvorgang" innerhalb eines Brenngastanksystems mit mehreren Brenngastanks ausgegangen werden. Das heißt, dass in den Brenngastank Brenngas aus einem anderen Brenngastank strömt. In diesem Fall kann das Tankventil so angesteuert bzw. geschlossen werden, dass der vorab festgelegte Temperatur-Grenzwert nicht überschritten wird.

Der erste Sensor zur Erfassung der Totaltemperatur ist vorzugsweise derart in den Betankungspfad integriert, dass er bei einer Umkehr der Strömungsrichtung des Brenngases im Betankungspfad nur den statischen Anteil der Temperatur misst. Das heißt, dass der erste Sensor nur in einer Richtung, und zwar in Befüllrichtung, direkt angeströmt wird. Ein direktes Anströmen des Sensors in der zur Befüllrichtung umgekehrten Strömungsrichtung kann insbesondere durch den Haltekörper verhindert werden, der bei umgekehrter Strömungsrichtung im Betankungspfad eine Abschirmung des Sensors bewirkt.

Das Verhältnis der Totaltemperatur zur statischen Temperatur hängt von der konkreten Geometrie und/oder der Anbindung der beiden Sensoren ab. Durch Kalibration können etwaige Fehler der Messsignale der beiden Sensoren reduziert werden, so dass die Messgenauigkeit weiter steigt.

Des Weiteren wird ein Brenngastank für ein Brenngastanksystem vorgeschlagen. Der Brenngastank weist aufweisend ein Speichervolumen auf, das über einen Betankungspfad mit integriertem Tankventil mit Brenngas befüllbar ist. Ferner weist der Brenngastank einen in den Betankungspfad integrierten Sensor zum Erfassen der Temperatur des Brenngases auf, wobei der Sensor und/oder ein den Sensor aufnehmender Haltekörper im Betankungspfad einen Staupunkt ausbildet bzw. ausbilden, in dessen Bereich ein Messbereich des Sensors angeordnet ist. Das heißt, dass die Temperatur des Brenngases im Bereich des Staupunkts gemessen wird, so dass mit Hilfe des Sensors die Totaltemperatur erfassbar ist.

Der vorgeschlagene Brenngastank kann demnach zur Durchführung des zuvor beschriebenen erfindungsgemäßen Verfahrens eingesetzt werden. Mit Hilfe des Brenngastanks können demnach die gleichen Vorteile wie mit Hilfe des zuvor beschriebenen erfindungsgemäßen Verfahrens erzielt werden.

Bevorzugt weist bzw. weisen der Sensor und/oder der Haltekörper eine Anströmfläche auf, die im Wesentlichen senkrecht zur Strömungsrichtung des Brenngases im Betankungspfad beim Befüllen des Speichervolumens mit Brenngas ausgerichtet ist. Beim Befüllen wird demnach das Brenngas an der Anströmfläche gestaut, so dass die Anströmfläche des Sensors und/oder des Haltekörpers den Staupunkt ausbildet. Zur Erfassung der Temperatur des Brenngases im Bereich des Staupunkts bildet bevorzugt die Anströmfläche des Sensors zugleich den Messbereich des Sensors aus.

In Weiterbildung der Erfindung ist außerhalb des Bereichs des Staupunkts ein weiterer Sensor in den Betankungspfad oder in das Speichervolumen integriert. Mit Hilfe des weiteren Sensors wird - aufgrund der Positionierung außerhalb des Bereichs des Staupunkts - die statische Temperatur im Brenngastank erfasst. Aus der mit Hilfe des ersten Sensors gemessenen Totaltemperatur und der mit Hilfe des weiteren Sensors gemessenen statischen Temperatur kann bzw. können ein Mittel- und/oder Differenzwert gebildet werden. Der Mittelwert gibt Auskunft über die mittlere Temperatur im Brenngastank, die zur Berechnung der gespeicherten Masse benötigt wird. Vom Differenzwert kann auf die Strömungsgeschwindigkeit des Brenngases in Befüllrichtung geschlossen werden.

Bei einer Integration des weiteren Sensors in den Betankungspfad ist dieser bevorzugt derart angeordnet bzw. ausgerichtet, dass er nicht direkt von dem Brenngas angeströmt wird, sondern das Brenngas am Sensor vorbeigeführt wird. Denn im Unterschied zum ersten Sensor gilt es im Bereich des weiteren Senors die Ausbildung eines Staupunkts zu vermeiden. Der Sensor kann hierzu im Wesentlichen parallel zur Strömungsrichtung des Brenngases angeordnet sein. Alternativ kann der weitere Sensor nicht nur außerhalb des Bereichs des Staupunkts, sondern auch außerhalb des Betankungspfads angeordnet sein, so dass sichergestellt ist, dass die statische Temperatur stärker berücksichtigt wird.

Des Weiteren wird vorgeschlagen, dass die beiden Sensoren über den Haltekörper verbunden sind. Der Haltekörper erleichtert somit die Montage der Sensoren.

Ferner bevorzugt ist der Betankungspfad zumindest abschnittsweise über ein in das Speichervolumen hineinragendes Rohr geführt. Das Rohr gibt eine Befüllrichtung vor. Ferner weist das Rohr einen definierten Strömungsquerschnitt auf, der die Ausbildung des Staupunkts durch den ersten Sensor und/oder den Haltekörper vereinfacht. Der erste Sensor und/oder der Haltekörper sind hierzu in das Rohr integriert, und zwar bevorzugt in der Weise, dass eine Anströmfläche in Befüllrichtung senkrecht zur Strömungsrichtung des Brenngases ausgerichtet ist.

Vorteilhafterweise bilden der Betankungspfad, das Tankventil und der mindestens eine Sensor eine Tankeinheit aus, die in eine, vorzugsweise mittig angeordnete, stirnseitige Öffnung einer das Speichervolumen umschließenden Wandung eingesetzt, insbesondere eingeschraubt, ist. Als Tankeinheit können alle Komponenten vormontiert und als vormontierte Baueinheit in den Brenngastank eingesetzt werden, so dass die Montage vereinfacht wird. Zugleich kann Bauraum eingespart werden. Die Tankeinheit kann darüber hinaus weitere Komponenten aufnehmen, beispielsweise ein weiteres Ventil und/oder einen weiteren Sensor. Ferner kann die Tankeinheit ein in das Speichervolumen hineinragendes Rohr aufweisen, über den der Betankungspfad zumindest abschnittsweise, insbesondere ein Endabschnitt des Betankungspfads, geführt ist.

Darüber hinaus wird ein Brenngastanksystem vorgeschlagen, das mindestens einen erfindungsgemäßen Brenngastank umfasst. Beispielsweise können mehrere gleichartige Brenngastanks in paralleler Anordnung über einen gemeinsamen Rahmen verbunden sein. Der Rahmen erleichtert den Einbau des Brenngastanksystems in ein Fahrzeug, beispielsweise in ein Brennstoffzellenfahrzeug.

Bevorzugte Ausführungsformen der Erfindung werden nachfolgend anhand der beigefügten Zeichnungen näher erläutert. Diese zeigen:
Fig. 1 einen schematischen Längsschnitt durch einen erfindungsgemäßen Brenngastank im Bereich einer Tankeinheit,
Fig. 2a)-d) jeweils einen schematischen Längsschnitt durch einen Haltekörper mit zwei Sensoren für einen erfindungsgemäßen Brenngastank,
Fig. 3 einen schematischen Längsschnitt durch ein Rohr mit integriertem Haltekörper und zwei Sensoren sowie
Fig. 4 einen schematischen Längsschnitt durch ein Rohr mit integriertem Haltekörper und zwei Sensoren.

### Ausführliche Beschreibung der Zeichnungen

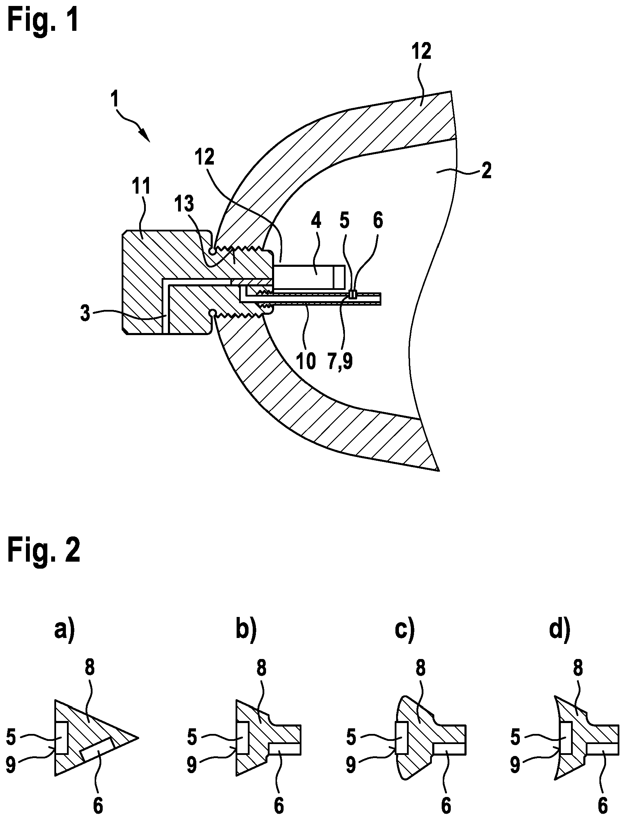

Der in der Figur 1 dargestellte Brenngastank 1 weist eine ein Speichervolumen 2 umschließende Wandung 12 mit einer stirnseitigen Öffnung 13 auf, in die eine Tankeinheit 11 eingesetzt ist. Über die Tankeinheit 11 führt ein Betankungspfad 3 mit integriertem Tankventil 4 zur Befüllung des Brenngastanks 1 mit frischem Brenngas. Ein Endabschnitt des Betankungspfads 3 wird durch ein in das Speichervolumen 2 hineinragendes Rohr 10 definiert. Da sich Brenngas, wie beispielsweise Wasserstoff, beim Einleiten in das Speichervolumen 2 stark erwärmt, wird die Temperatur des Brenngases mit Hilfe von Sensoren 5, 6 überwacht. Ein erster Sensor 5 dient dabei der Erfassung der Totaltemperatur, ein zweiter Sensor 6 der Erfassung der statischen Temperatur.

Zur Erfassung der Totaltemperatur, das heißt einer lokal auftretenden maximalen Temperatur, ist der erste Sensor 5 in der Weise in das Rohr 10 integriert, dass er im Betankungspfad 3 zu liegen kommt und in Befüllrichtung von dem Brenngas direkt angeströmt wird. An einer senkrecht zur Strömungsrichtung des Brenngases ausgerichteten Anströmfläche 9 des Sensors 5 staut sich das Brenngas, so dass die über die Anströmfläche 9 ein Staupunkt 7 ausgebildet wird. Der zweite Sensor 6 zur Erfassung der statischen Temperatur ist ebenfalls in das Rohr 10 integriert, allerdings derart orientiert, dass er in Befüllrichtung nicht direkt angeströmt wird. Das heißt, dass durch den zweiten Sensor 6 kein Staupunkt ausgebildet wird, sondern das Brenngas ungehindert vorbeiströmen kann.

Von den beiden Sensoren 5, 6 kann zumindest ein Sensor 5, 6 mittelbar über einen Haltekörper 8 am Rohr 10 befestigt sein. Dies gilt insbesondere für den ersten Sensor 5, da der Haltekörper 8 eine in Bezug auf den Betankungspfad 3 möglichst mittige Anordnung des Sensors 5 ermöglicht, so dass der Sensor 5 gut angeströmt wird. Je nach Ausgestaltung des Haltekörpers 8 kann auch der zweite Sensor 6 in diesen integriert werden. Ausführungsbeispiele sind den Figuren 2a) bis 2d) zu entnehmen. Diese zeigen, dass der zweite Sensor 6 jeweils in Strömungsrichtung des Brenngases stromabwärts des ersten Sensors 5 angeordnet ist, und zwar winklig, insbesondere rechtwinklig, so dass Brenngas ungehindert vorbeiströmen kann. Zur Strömungsoptimierung im Betankungspfad 3 kann der Haltekörper 8 stromaufwärts des zweiten Sensors 6 eine sich in Befüllrichtung verjüngende, beispielsweise konisch zulaufende, Außenkontur aufweisen. Kehrt sich die Strömungsrichtung des Brenngases im Betankungspfad 3 um, ist über die Außenkontur des Haltekörpers 8 zugleich sichergestellt, dass das Brenngas am ersten Sensor 5 vorbeiströmt, so dass auch dieser nur die statische Temperatur erfasst.

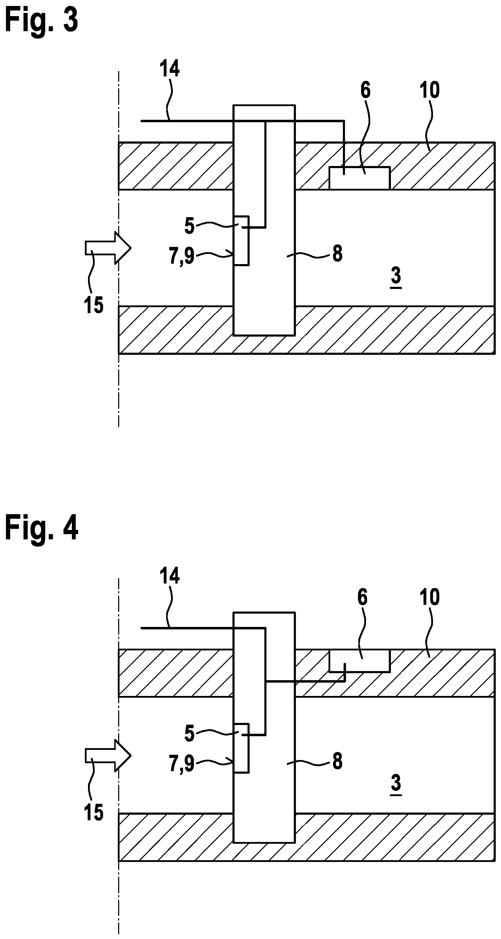

Der erste Sensor 5 ist vorzugsweise derart in den Haltekörper 8 integriert, dass die Anströmfläche 9 des Sensors 5 zugleich die Anströmfläche 9 des Haltekörpers 8 ausbildet. Diese kann - wie in den Figuren 2a) und 2b) gezeigt - eben ausgeführt sein. Die Anströmfläche 9 kann aber auch gemäß der Figur 2c) konvex oder gemäß der Figur 3d) konkav geformt sein. Über die Form der Anströmfläche 9 kann ebenfalls eine Strömungsoptimierung erzielt werden.

Der Figur 3 ist ein weiterer Haltekörper 8 mit einem Sensor 5 zur Erfassung der Totaltemperatur zu entnehmen. Der Haltekörper 8 ist in das Rohr 10 integriert und erstreckt sich senkrecht zur Strömungsrichtung 15 des Brenngases. Wie die Figur 3 zeigt, kann über den Haltekörper 8 zugleich ein Anschlussdraht 14 bis an den Sensor 5 geführt werden, um den notwendigen elektrischen Anschluss des Sensors 5 zu realisieren. Der zweite Sensor 6 zur Erfassung der statischen Temperatur ist innenseitig in das Rohr 10 integriert, so dass der Strömungsquerschnitt durch den zweiten Sensor 6 nicht eingeschränkt wird. Der Brenngasstrom führt somit am zweiten Sensor 6 vorbei. Der Anschlussdraht 14 des zweiten Sensors 6 wird über den Haltekörper 8 nach außen geführt.

Das Ausführungsbeispiel der Figur 4 unterscheidet sich von dem der Figur 3 lediglich dadurch, dass der zweite Sensor 6 außenseitig in das Rohr 10 integriert ist, so dass mit Hilfe des zweiten Sensors 6 die statische Temperatur des Brenngases im Speichervolumen 2 erfasst wird. Der Anschlussdraht 14 ist zudem durch den Haltekörper 8 hindurch nach außen geführt.

## Patentansprüche

1. Verfahren zum Befüllen eines Speichervolumens (2) eines Brenngastanks (1) mit Brenngas, bei dem das Brenngas über einen Betankungspfad (3) mit integriertem Tankventil (4) in das Speichervolumen (2) eingeleitet wird und mit Hilfe eines Sensors (5) die Temperatur des Brenngases erfasst wird,
**dadurch gekennzeichnet, dass** der Sensor (5) in den Betankungspfad (3) integriert ist, sodass die Temperatur im Bereich eines Staupunkts (7) erfasst wird, der durch den Sensor (5) und/oder einen den Sensor (5) aufnehmenden Haltekörper (8) ausgebildet wird.

2. Verfahren nach Anspruch 1,
**dadurch gekennzeichnet, dass** die Messwerte des Sensors (5) mit einem vorab festgelegten Temperatur-Grenzwert verglichen werden und bei Überschreiten des Temperatur-Grenzwerts der Betankungsvorgang abgebrochen oder unterbrochen wird.

3. Verfahren nach Anspruch 1 oder 2,
**dadurch gekennzeichnet, dass** mit Hilfe eines weiteren Sensors (6) die Temperatur des Brenngases außerhalb des Bereichs des Staupunkts (7), beispielsweise im Speichervolumen (2), erfasst wird und aus den Messwerten beider Sensoren (5, 6) der Mittel- und/oder Differenzwert ermittelt wird bzw. werden.

4. Verfahren nach Anspruch 3,
**dadurch gekennzeichnet, dass** aus dem Differenzwert die Strömungsgeschwindigkeit des Brenngases abgeleitet wird.

5. Brenngastank (1) für ein Brenngastanksystem, aufweisend ein Speichervolumen (2), das über einen Betankungspfad (3) mit integriertem Tankventil (4) mit Brenngas befüllbar ist, ferner aufweisend einen in den Betankungspfad (3) integrierten Sensor (5) zum Erfassen der Temperatur des Brenngases,
**dadurch gekennzeichnet, dass** der Sensor (5) und/oder ein den Sensor (5) aufnehmender Haltekörper (8) im Betankungspfad (3) einen Staupunkt (7) ausbildet bzw. ausbilden, in dessen Bereich ein Messbereich des Sensors (5) angeordnet ist.

6. Brenngastank (1) nach Anspruch 5,
**dadurch gekennzeichnet, dass** der Sensor (5) und/oder der Haltekörper (8) eine Anströmfläche (9) aufweist bzw. aufweisen, die im Wesentlichen senkrecht zur Strömungsrichtung (15) des Brenngases im Betankungspfad (3) beim Befüllen des Speichervolumens (2) mit Brenngas ausgerichtet ist.

7. Brenngastank (1) nach Anspruch 5 oder 6,
**dadurch gekennzeichnet, dass** außerhalb des Bereichs des Staupunkts (7) ein weiterer Sensor (6) in den Betankungspfad (3) oder in das Speichervolumen (2) integriert ist.

8. Brenngastank (1) nach einem der Ansprüche 5 bis 7,
**dadurch gekennzeichnet, dass** der Betankungspfad (3) zumindest abschnittsweise über ein in das Speichervolumen (2) hineinragendes Rohr (10) geführt ist.

9. Brenngastank (1) nach einem der Ansprüche 5 bis 8,
**dadurch gekennzeichnet, dass** der Betankungspfad (3), das Tankventil (4) und der mindestens eine Sensor (5, 6) eine Tankeinheit (11) ausbilden, die in eine, vorzugsweise mittig angeordnete, stirnseitige Öffnung (13) einer das Speichervolumen (2) umschließenden Wandung (12) eingesetzt, insbesondere eingeschraubt, ist.

10. Brenngastanksystem, umfassend mindestens einen Brenngastank (1) nach einem der Ansprüche 5 bis 9.

## Claims

1. Method for filling a storage volume (2) of a fuel gas tank (1) with fuel gas, in which method the fuel gas is introduced into the storage volume (2) via a fuelling path (3) with an integrated tank valve (4) and the temperature of the fuel gas is detected by means of a sensor (5),
**characterized in that** the sensor (5) is integrated into the fuelling path (3), so that the temperature in the region of a stagnation point (7), which is formed by the sensor (5) and/or a holding body (8) which receives the sensor (5), is detected.

2. Method according to Claim 1,
**characterized in that** the measured values from the sensor (5) are compared with a predefined temperature limit value and, if the temperature limit value is exceeded, the fuelling process is aborted or interrupted.

3. Method according to Claim 1 or 2,
**characterized in that** the temperature of the fuel gas outside the region of the stagnation point (7), for example in the storage volume (2), is detected by means of a further sensor (6) and the mean and/or difference value are/is determined from the measured values from both sensors (5, 6).

4. Method according to Claim 3,
**characterized in that** the flow velocity of the fuel gas is derived from the difference value.

5. Fuel gas tank (1) for a fuel gas tank system, comprising a storage volume (2), which can be filled with fuel gas via a fuelling path (3) having an integrated tank valve (4), further comprising a sensor (5), which is integrated into the fuelling path (3), for detecting the temperature of the fuel gas,
**characterized in that** the sensor (5) and/or a holding body (8) which receives the sensor (5) form/forms a stagnation point (7) in the fuelling path (3), a measurement region of the sensor (5) being arranged in the region of the stagnation point.

6. Fuel gas tank (1) according to Claim 5,
**characterized in that** the sensor (5) and/or the holding body (8) have/has an inflow surface (9) which is oriented substantially perpendicular to the flow direction (15) of the fuel gas in the fuelling path (3) when filling the storage volume (2) with fuel gas.

7. Fuel gas tank (1) according to Claim 5 or 6,
**characterized in that** a further sensor (6) is integrated into the fuelling path (3) or into the storage volume (2), outside the region of the stagnation point (7).

8. Fuel gas tank (1) according to any of Claims 5 to 7,
**characterized in that** the fuelling path (3) is guided at least in sections via a tube (10) which projects into the storage volume (2).

9. Fuel gas tank (1) according to any of Claims 5 to 8,
**characterized in that** the fuelling path (3), the tank valve (4) and the at least one sensor (5, 6) form a tank unit (11), which is inserted, in particular screwed, into a, preferably centrally arranged, end-side opening (13) in a wall (12) enclosing the storage volume (2).

10. Fuel gas tank system, comprising at least one fuel gas tank (1) according to any of Claims 5 to 9.

## Revendications

1. Procédé de remplissage d'un volume de stockage (2) d'un réservoir de gaz combustible (1) avec du gaz combustible, avec lequel le gaz combustible est introduit dans le volume de stockage (2) par le biais d'un trajet de remplissage (3) pourvu d'une soupape de réservoir (4) intégrée et la température du gaz combustible est détectée à l'aide d'un capteur (5),
**caractérisé en ce que** le capteur (5) est intégré dans le trajet de remplissage (3), de sorte que la température est détectée dans la zone d'un point de stagnation (7) qui est formé par le capteur (5) et/ou un corps de maintien (8) recevant le capteur (5).

2. Procédé selon la revendication 1,
**caractérisé en ce que** les valeurs mesurées du capteur (5) sont comparées à une valeur limite de température spécifiée préalablement et, en cas de dépassement de la valeur limite de température, l'opération de remplissage est interrompue ou suspendue.

3. Procédé selon la revendication 1 ou 2,
**caractérisé en ce que** la température du gaz combustible à l'extérieur de la zone du point de stagnation (7), par exemple dans le volume de stockage (2), est détectée à l'aide d'un capteur supplémentaire (6) et la valeur de la moyenne et/ou la valeur de la différence est ou sont déterminée(s) à partir des valeurs de mesure des deux capteurs (5, 6).

4. Procédé selon la revendication 3,
**caractérisé en ce que** la vitesse d'écoulement du gaz combustible est déduite de la valeur de la différence.

5. Réservoir de gaz combustible (1) pour un système de réservoir de gaz combustible, possédant un volume de stockage (2) qui peut être rempli de gaz combustible par le biais d'un trajet de remplissage (3) pourvu d'une soupape de réservoir (4) intégrée, possédant en outre un capteur (5) intégré dans le trajet de remplissage (3) pour détecter la température du gaz combustible, **caractérisé en ce que** le capteur (5) et/ou un corps de maintien (8) recevant le capteur (5) forme ou forment un point de stagnation (7) dans le trajet de remplissage (3), dans la zone duquel est disposée une zone de mesure du capteur (5).

6. Réservoir de gaz combustible (1) selon la revendication 5,
**caractérisé en ce que** le capteur (5) et/ou le corps de maintien (8) possède ou possèdent une surface d'arrivée d'écoulement (9), qui est orientée sensiblement perpendiculairement à la direction d'écoulement (15) du gaz combustible dans le trajet de remplissage (3) lors du remplissage du volume de stockage (2) avec du gaz combustible.

7. Réservoir de gaz combustible (1) selon la revendication 5 ou 6,
**caractérisé en ce qu'**à l'extérieur de la zone du point de stagnation (7) un capteur supplémentaire (6) est intégré dans le trajet de remplissage (3) ou dans le volume de stockage (2) .

8. Réservoir de gaz combustible (1) selon l'une des revendications 5 à 7, **caractérisé en ce que** le trajet de remplissage (3) passe au moins par portions par un tuyau (10) qui fait saillie dans le volume de stockage (2).

9. Réservoir de gaz combustible (1) selon l'une des revendications 5 à 8, **caractérisé en ce que** le trajet de remplissage (3), la soupape de réservoir (4) et l'au moins un capteur (5, 6) forment une unité de réservoir (11) qui est insérée, en particulier vissée, dans une ouverture frontale (13), de préférence disposée au centre, d'une paroi (12) qui entoure le volume de stockage (2).

10. Système de réservoir de gaz combustible, comprenant au moins un réservoir de gaz combustible (1) selon l'une des revendications 5 à 9.
